# EUROPÄISCHE PATENTSCHRIFT

(11) **EP 2 692 568 B1**
(45) Veröffentlichungstag und Bekanntmachung des Hinweises auf die Patenterteilung: **26.11.2014**
(21) Anmeldenummer: 13001180.2
(22) Anmeldetag: 09.03.2013
(51) Int. Cl.: B60K 7/00, B60R 16/08

(54) **Leitungsverlegung für Nutzfahrzeuge**
Routing of cables for commercial vehicles
Chemins de câbles pour véhicules utilitaires

(30) Priorität: 03.08.2012 DE 102012015451
(43) Veröffentlichungstag der Anmeldung: 05.02.2014
(73) Patentinhaber: MAN Truck & Bus AG, 80995 München (DE)
(72) Erfinder: Wolfgang, Artmaier, 80935 München (DE); Franz, Resch, 82299 Türkenfeld (DE); Reinhard, Ittlinger, 94363 Oberschneiding (DE)

(56) Entgegenhaltungen:
- WO-A1-2012/035368
- DE-A1- 1 922 399
- DE-C- 825 490
- US-A- 4 546 844

## Beschreibung

Die vorliegende Erfindung betrifft eine Anordnung für ein für den Straßenverkehr zugelassenes Nutzfahrzeug mit einer zugelassenen Höchstgeschwindigkeit von über 60 km/h, wie etwa einen Lastkraftwagen oder einen Omnibus, gemäß dem Oberbegriff des Anspruchs 1.

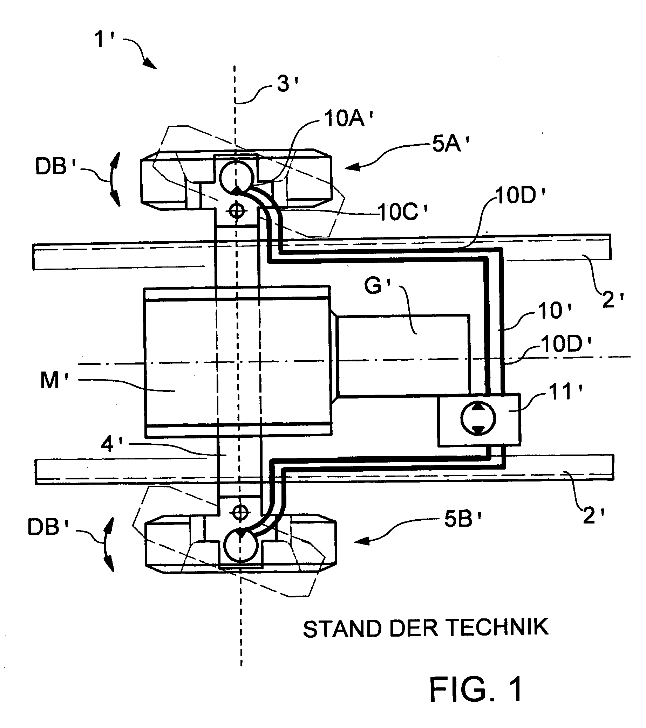

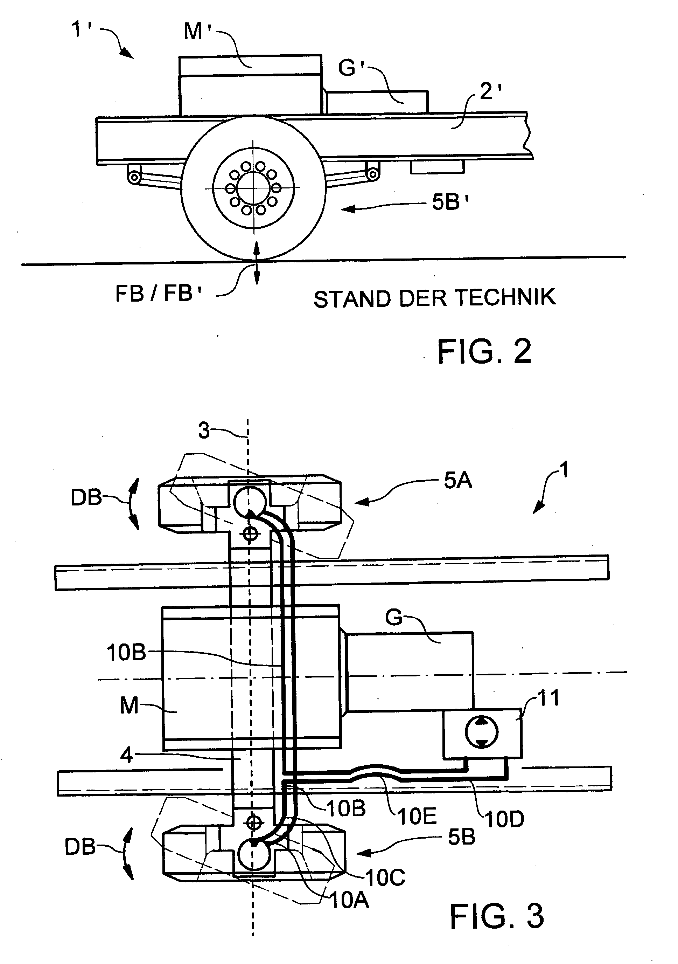

Figur 1 zeigt eine Draufsicht auf eine Anordnung 1' für ein Nutzfahrzeug gemäß Stand der Technik, während Figur 2 eine Seitenansicht der Anordnung 1' zeigt. Die Anordnung 1' umfasst eine zwei Längsträger 2' aufweisende Rahmentragstruktur, eine einen Achskörper 4' aufweisende Vorderachse 3' und linke und rechte Radteile 5A' und 5B', die mit einem hydrostatischen Vorderradantrieb und einer Bremsanlage ausgestattet sind. Die Anordnung 1' umfasst außerdem eine Motoreinrichtung M' zum Antrieben des Nutzfahrzeugs, eine Getriebeeinrichtung G', zwei Leitungen 10' und eine Hochdruckpumpe 11'. Die Hochdruckpumpe 11' ist an der Getriebeeinrichtung G' befestigt und dient insbesondere dazu, die hydrostatischen Vorderantriebe über die zwei Leitungen 10' mit druckbeaufschlagtem Fluid zu versorgen.

Nachfolgend wird nur die Leitung 10' beschrieben, die zu dem Radteil 5A' führt. Die Leitung 10', die zu dem Radteil 5B' führt, ist im Wesentlichen gleich ausgeführt und funktioniert auf die im Wesentlichen gleiche Weise. Die Leitung 10' umfasst mehrere Leitungsabschnitte und bildet einen geschlossenen hydraulischen Kreislauf. Die Leitung 10' umfasst einen triebstrangfesten Leitungsabschnitt 10D', einen ebenfalls mit dem Bezugszeichen 10D' versehenen längsträgerfesten Leitungsabschnitt und einen radteilfesten Leitungsabschnitt 10A'. Die Leitung 10' springt von der Oberkante des Längsträgers 2' direkt auf das Radteil 5A'.

Der radteilfeste Leitungsabschnitt 10A' und der längsträgerfeste Leitungsabschnitt 10D' sind über einen flexiblen Leitungsabschnitt 10C' miteinander verbunden. Der flexible Leitungsabschnitt 10C' dient dazu, durch Lenkbewegungen DB' (Figur 1) und zudem durch Federbewegungen FB' (Figur 2) erzeugte Relativbewegungen zwischen dem längsträgerfesten Leitungsabschnitt 10D' und dem radteilfesten Leitungsabschnitt 10A' auszugleichen. Kinematisch bedeutet das, dass sich die Leitung 10, insbesondere der flexible Leitungsabschnitt 10C', bei kombinierten bzw. zeitgleichen Lenk- und Federbewegungen quasi in drei Raumachsen bewegen muss, was zu einer nachteilhaften Torsionsbeanspruchung führt.

Ein weiterer Nachteil ist, dass die Leitung 10' relativ nahe am Rad des Nutzfahrzeugs verläuft, weshalb es erschwert ist, auf die hydrostatisch angetriebenen Vorderräder Gleitschutzketten zu montieren.

Ein weiterer Nachteil ist, dass der längsträgerfeste Leitungsabschnitt 10D' anderweitig nutzbaren Bauraum an oder in dem Längsträger 2' beansprucht.

Ein weiterer Nachteil ist, dass die Leitungsführung der Leitung 10' dazu führt, dass der Bauraum für einen Arbeitsnebenabtrieb am Getriebe G' verdeckt wird, was den Zugriff darauf erschwert.

Aus der WO 2012 / 035368 A1 ist ein Fahrzeug bekannt, dessen beide lenkbaren Vorderräder von Hydraulikmotoren antreibbar sind. Dabei ist an jedem dieser Räder jeweils ein Hydraulikmotor angeordnet, der an einen gemeinsamen Hydraulikkreislauf angeschlossen ist.

Es ist Aufgabe der Erfindung, eine alternative und/oder verbesserte Leitungsführung für ein Nutzfahrzeug zu schaffen.

Diese Aufgabe kann insbesondere mit den Merkmalen des Hauptanspruchs gelöst werden. Vorteilhafte Weiterbildungen sind den Unteransprüchen zu entnehmen.

Die Erfindung schafft eine Anordnung für ein für den Straßenverkehr zugelassenes Nutzfahrzeug mit einer vorzugsweise zugelassenen Höchstgeschwindigkeit von über 60 km/h. Die Anordnung umfasst einen eine Achse aufweisenden Achskörper, zumindest ein Radteil, das relativ zu dem Achskörper bewegbar ist, um eine Lenkbewegung des Nutzfahrzeugs zu ermöglichen, und zumindest eine Leitung, die zu dem Radteil führt und die mehrere Leitungsabschnitte umfasst, von denen zumindest ein Leitungsabschnitt radteilfest an dem Radteil angeordnet ist. Zudem kann die Anordnung eine z.B. zwei Längstragelemente und zumindest ein Quertragelement aufweisende Rahmentragstruktur (z.B. ein Fahrgestell für das Nutzfahrzeug) umfassen. Das Nutzfahrzeug ist insbesondere ein Lastkraftwagen oder ein Omnibus.

Die Anordnung zeichnet sich insbesondere dadurch aus, dass ein Leitungsabschnitt achsfest an dem Achskörper angeordnet ist und zweckmäßig entlang diesem verläuft. Alternativ oder ergänzend zeichnet sich die Anordnung insbesondere dadurch aus, dass die Leitung über zwei räumlich voneinander separierte flexible Leitungsabschnitte verfügt, nämlich einen ersten Leitungsabschnitt (nachfolgend als radteilflexibler Leitungsabschnitt bezeichnet) und einen zweiten Leitungsabschnitt (nachfolgend als achsflexibler Leitungsabschnitt bezeichnet). Der radteilflexible Leitungsabschnitt dient dazu, eine durch eine Lenkbewegung verursachte Relativbewegung auszugleichen. Der achsflexible Leitungsabschnitt dient dazu, eine durch eine Federbewegung verursachte Relativbewegung auszugleichen. Dadurch wird zweckmäßig die gemäß Stand der Technik stattfindende räumliche, torsionsbehaftete Bewegung der Leitung in zwei voneinander beabstandete, definierte Biegebewegungen aufgeteilt. Durch die zwei räumlich voneinander beabstandeten flexiblen Leitungsabschnitte wird also insbesondere ermöglicht, dass die Relativbewegungen der Leitung in zwei definierte Achsen aufgeteilt werden, nämlich einer Biegeachse für den Lenkbewegungsausgleich und einer Biegeachse für den Federbewegungsausgleich.

Die durch die Lenkbewegung verursachte Relativbewegung findet insbesondere zwischen dem achsfesten Leitungsabschnitt und dem radteilfesten Leitungsabschnitt statt. Die durch eine Federbewegung verursachte Relativbewegung findet insbesondere zwischen dem längstragelementfesten bzw. dem triebstrangfesten Leitungsabschnitt und dem achsfesten Leitungsabschnitt statt.

Der radteilflexible Leitungsabschnitt dient insbesondere dazu, im Wesentlichen nur die durch die Lenkbewegung verursachte Relativbewegung zwischen dem achsfesten Leitungsabschnitt und dem radteilfesten Leitungsabschnitt auszugleichen, zweckmäßig mittels einer im Wesentlichen einebig stattfindenden Ausgleichsbiegebewegung. Diese Ausgleichsbiegebewegung findet hauptsächlich in nur einer einzigen, vorzugsweise im Wesentlichen horizontalen, Ebene statt, wodurch eine Torsionsbelastung vermieden oder zumindest reduziert werden kann.

Es ist möglich, dass der radteilflexible Leitungsabschnitt den achsfesten Leitungsabschnitt und den radteilfesten Leitungsabschnitt verbindet.

Es ist möglich, dass der radteilfeste Leitungsabschnitt und der radteilflexible Leitungsabschnitt über eine Kupplungsschnittstelle verbunden sind, die in die Lenkachse des Radteils gelegt ist und/oder die als Pressfassung ausgeführt ist. Dadurch kann insbesondere die Bewegung der Leitungsenden zueinander minimiert werden und ebenso kann z.B. eine minimierte Leitungslänge unter den gegebenen technisch möglichen minimalen Biegeradien realisiert werden. Das ist insbesondere deshalb wichtig, da aufgrund des begrenzten Bauraums der radteilflexible, zum Ausgleich der Lenkbewegung vorgesehene Leitungsabschnitt nur relativ kurz ausgebildet werden kann. Die Lenkachse wird zweckmäßig durch den Achsschenkelbolzen definiert.

Es ist möglich, dass ein Leitungsabschnitt triebstrangfest bzw. längstragelementfest an einem der Längstragelemente angeordnet ist und zweckmäßig entlang diesem verläuft. Vorzugsweise verbindet der achsflexible Leitungsabschnitt den längstragelementfesten Leitungsabschnitt und den achsfesten Leitungsabschnitt.

Es ist möglich, dass ein Leitungsabschnitt triebstrangfest an einem Triebstrang für das Nutzfahrzeug angeordnet ist und zweckmäßig entlang diesem verläuft. Der triebstrangfeste Leitungsabschnitt umfasst insbesondere einen getriebefesten und/oder motorfesten Leitungsabschnitt. Vorzugsweise verbindet der achsflexible Leitungsabschnitt den triebstrangfesten Leitungsabschnitt und den achsfesten Leitungsabschnitt.

Der achsflexible Leitungsabschnitt dient insbesondere dazu, im Wesentlichen nur die durch die Federbewegung verursachte Relativbewegung zwischen dem achsfesten Leitungsabschnitt und dem längstragelementfesten bzw. triebstrangfesten Leitungsabschnitt auszugleichen, zweckmäßig mittels einer im Wesentlichen einebig stattfindenden Ausgleichsbiegebewegung. Diese Ausgleichsbiegebewegung findet hauptsächlich in nur einer einzigen, vorzugsweise im Wesentlichen vertikalen, Ebene statt, wodurch zweckmäßig eine Torsionsbelastung vermieden oder zumindest reduziert werden kann.

Es ist möglich, dass eine oder mehrere Leitungen über eine Kupplungseinrichtung (z.B. eine Steckkupplung), die auf dem Achskörper angeordnet ist, zu dem Radteil geführt werden.

Das Radteil umfasst einen vorzugsweise hydrostatisch angetriebenen Radmotor und die Leitung dient zweckmäßig dazu, den Radmotor mit druckbeaufschlagtem Fluid zu versorgen, das zweckmäßig von einer Pumpeneinrichtung, insbesondere einer Hochdruckpumpeneinrichtung, zur Verfügung gestellt wird.

Es ist ebenso möglich, dass das Radteil eine Bremsanlage (z.B. eine DruckluftBremsanlage oder ein hydraulische Bremsanlage) umfasst und die Leitung zweckmäßig auch dazu dienen kann, die Bremsanlage mit druckbeaufschlagtem Fluid zu versorgen. Die Bremsanlage ist vorzugsweise in das Radteil integriert.

Es ist möglich, dass die Leitung längstragelementbefestigungsfrei zu dem Radteil geführt wird, insbesondere ausgehend von einer Pumpeneinrichtung.

Der Achskörper ist vorzugsweise ein Vorderachskörper und/oder Starrachskörper, der zweckmäßig lenkbar ausgeführt ist.

Die Leitung ist vorzugsweise als Hydraulikleitung und/oder Hochdruckleitung ausgeführt. Die Hydraulikleitung und/oder die Hochdruckleitung kann gemäß Stand der Technik ausgeführt sein. Die Leitung kann z.B. ausgeführt sein, um Fluid, das mit über ungefähr 100 bar beaufschlagt ist, zu führen. Die Leitung bildet vorzugsweise einen geschlossenen hydraulischen Kreislauf, zweckmäßig mit Vor- und Rücklauf.

Die Erfindung umfasst außerdem ein Nutzfahrzeug, insbesondere einen Lastkraftwagen oder einen Omnibus, mit einer wie hierin beschriebenen Anordnung.

Zu erwähnen ist, dass die Anordnung vorzugsweise zumindest zwei Leitungen umfasst, nämlich mindestens eine Leitung, die zu einem linken Radteil führt, und mindestens eine Leitung, die zu einem rechten Radteil führt, z.B. einen Vor- und Rücklauf nach rechts und einen Vor- und Rücklauf nach links.

Zu erwähnen ist ferner, dass im Rahmen der Erfindung das Merkmal der "Federbewegung" breit auszulegen ist und allgemein auch andere im Wesentlichen vertikale Relativbewegungen umfasst. Die "Federbewegung" im Rahmen der Erfindung umfasst insbesondere auch Verschränkungsbewegungen des Nutzfahrzeugs.

Zu erwähnen ist außerdem, dass im Rahmen der Erfindung die Leitung auch durchaus zumindest geringfügig torsionsbeansprucht werden kann. Die Torsionsbeanspruchung kann z.B. durch ein Starr- und/oder Drehelement aufgefangen werden.

Ferner ist zu erwähnen, dass die Längstragelemente zumindest abschnittsweise z.B. als Längstragprofile (z.B. Hohl-, U-, I- oder L-Tragprofilelemente) ausgeführt sein können, um z.B. eine leiterrahmenförmige Rahmentragstruktur zu schaffen. Die Erfindung ist hierauf aber nicht eingeschränkt, sondern umfasst z.B. auch zumindest abschnittsweise monocoqueförmige oder semi-monocoqueförmige Rahmentragstrukturen, worunter insbesondere selbsttragende schalenförmige Tragstrukturen verstanden werden (z.B. aus Blech-, Tiefzieh- oder Verbundmaterial).

Die vorstehend beschriebenen Merkmale und bevorzugten Ausführungsformen der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Fig. 1: zeigt eine Draufsicht auf eine Anordnung für ein Nutzfahrzeug gemäß Stand der Technik,
- Fig. 2: zeigt eine Seitenansicht der Anordnung aus Fig. 1,
- Fig. 3: zeigt eine Draufsicht auf eine Anordnung für ein Nutzfahrzeug gemäß einer Ausführungsform der Erfindung,
- Fig. 4: zeigt eine Seitenansicht einer Anordnung gemäß einer anderen Ausführungsform der Erfindung,
- Fig. 5: zeigt eine perspektivische Unteransicht der Anordnung aus Fig. 4, und
- Fig. 6: zeigt eine perspektivische Detailansicht der Anordnung aus den Fig. 4 und 5.

Die unter Bezugnahme auf die Figuren beschriebenen Ausführungsformen stimmen teilweise überein, wobei ähnliche oder identische Teile mit den gleichen Bezugszeichen versehen sind und zu deren Erläuterung auch auf die Beschreibung anderer Ausführungsformen oder Figuren verwiesen wird, um Wiederholungen zu vermeiden.

Figur 3 zeigt eine Draufsicht auf eine Anordnung 1 für ein Nutzfahrzeug gemäß einer Ausführungsform der Erfindung. Die Anordnung 1 umfasst eine zwei Längstragelemente 2, insbesondere Längsträger aufweisende Rahmentragstruktur für das Nutzfahrzeug, einen eine Achse 3 aufweisenden Achskörper 4, zwei Radteile 5A und 5B, die relativ zu dem Achskörper 4 bewegbar sind, um eine Lenkbewegung DB des Nutzfahrzeugs zu ermöglichen, und Leitungen 10, die zu den zwei Radteilen 5A und 5B führen. Der Achskörper 4 ist als vorderer Starrachskörper ausgeführt. Die Radteile 5A und 5B sind mit hydrostatischen Radmotoren und Bremsanlagen ausgestattet. Die Anordnung 1 umfasst außerdem eine Motoreinrichtung M zum Antreiben des Nutzfahrzeugs, die über dem Achskörper 4 verläuft, und eine Getriebeeinrichtung G. Zudem umfasst die Anordnung 1 eine Hochdruckpumpeneinrichtung 11, die dazu dient, die hydrostatischen Radmotoren über die Leitungen 10 mit druckbeaufschlagtem Fluid zu versorgen.

Nachfolgend wird die Anordnung 1 unter Bezugnahme auf die zu dem Radteil 5B führende Leitung 10 beschrieben. Die zu dem Radteil 5A führende Leitung 10 ist im Wesentlichen gleich ausgeführt und funktioniert auf die im Wesentlichen gleiche Weise.

Die Leitung 10 umfasst mehrere Leitungsabschnitte, insbesondere einen radteilfesten Leitungsabschnitt 10A, einen achsfesten Leitungsabschnitt 10B, einen radteilflexiblen (ersten) Leitungsabschnitt 10C, einen triebstrang- bzw. längsträgerfesten Leitungsabschnitt 10D und einen achsflexiblen (zweiten) Leitungsabschnitt 10E. Die Leitung 10 ist schlauchförmig (z.B. aus Stahl) ausgeführt und kann zudem starre Leitungsabschnitte umfassen. Die flexiblen Leitungsabschnitte 10C und 10E können biegsam ausgeführt sein oder z.B. starr und mit einem Gelenk versehen, um die Flexibilität zu erzielen. Der radteilflexible Leitungsabschnitt 10C und der achsflexible Leitungsabschnitt 10E sind räumlich voneinander separiert.

Der radteilflexible Leitungsabschnitt 10C verbindet den achsfesten Leitungsabschnitt 10B mit dem radteilfesten Leitungsabschnitt 10A und dient dazu, eine durch eine Lenkbewegung DB verursachte Relativbewegung zwischen dem achsfesten Leitungsabschnitt 10B und dem radteilfesten Leitungsabschnitt 10A mittels einer Ausgleichsbiegebewegung auszugleichen. Diese Ausgleichsbiegebewegung findet im Wesentlichen horizontal einebig statt, wodurch Torsionsbeanspruchungen vermieden oder zumindest reduziert werden.

Der achsflexible Leitungsabschnitt 10E verbindet den achsfesten Leitungsabschnitt 10B mit dem längsträgerfesten Leitungsabschnitt 10D und dient dazu, eine durch eine Federund/oder Verschränkungsbewegung FB (Figur 2) verursachte Relativbewegung zwischen dem längsträgerfesten Leitungsabschnitt 10D und dem achsfesten Leitungsabschnitt 10B mittels einer Ausgleichsbiegebewegung auszugleichen. Diese Ausgleichsbiegebewegung findet im Wesentlichen vertikal einebig statt, wodurch Torsionsbeanspruchungen vermieden oder zumindest reduziert werden.

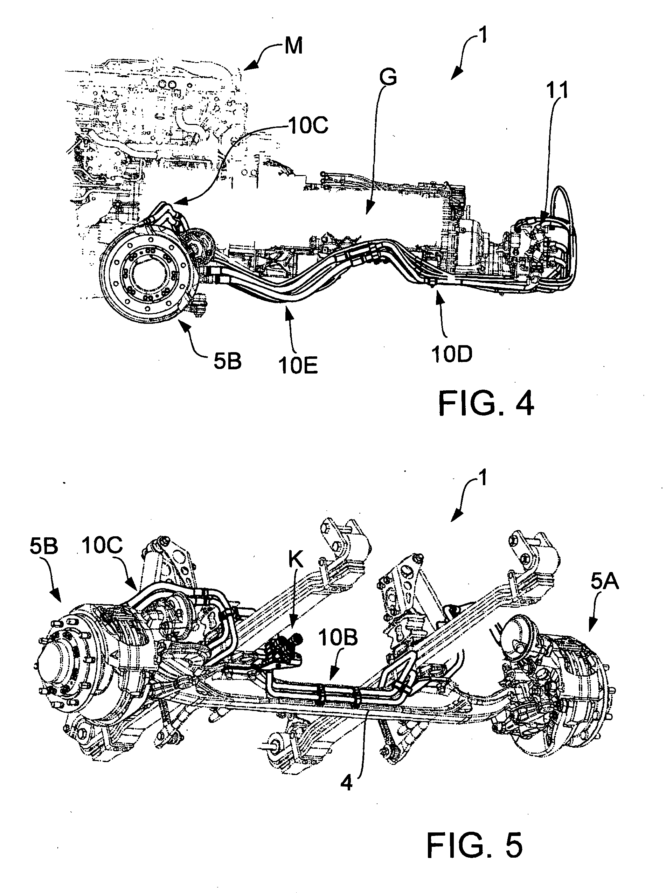

Figur 4 zeigt eine Anordnung 1 für ein Nutzfahrzeug gemäß einer anderen Ausführungsform der Erfindung. Eine Besonderheit dieser Anordnung 1 ist, dass die Leitung 10 nicht über einen längsträgerfesten Leitungsabschnitt zu dem Radteil 5B geführt wird, sondern über einen triebstrangfesten Leitungsabschnitt. Da der längsträgerfeste Leitungsabschnitt und der triebstrangfeste Leitungsabschnitt mit Ausnahme ihrer Anordnung und ihrer Festmachplatzierung im Wesentlichen gleich ausgeführt sind, sind beide mit dem Bezugszeichen 10D versehen.

Der Triebstrang umfasst insbesondere die Motoreinrichtung M und die Getriebeeinrichtung G. Der triebstrangfeste Leitungsabschnitt 10D umfasst zumindest einen getriebefesten Leitungsabschnitt.

In der in Figur 4 gezeigten Ausführungsform verbindet der achsflexible Leitungsabschnitt 10E den achsfesten Leitungsabschnitt 10B mit dem triebstrangfesten Leitungsabschnitt 10D und dient dazu, eine durch eine Feder- und/oder Verschränkungsbewegung FB (Figur 2) verursachte Relativbewegung zwischen dem triebstrangfesten Leitungsabschnitt 10D und dem achsfesten Leitungsabschnitt 10B mittels einer Ausgleichsbiegebewegung auszugleichen. Diese Ausgleichsbiegebewegung findet im Wesentlichen vertikal einebig statt, wodurch Torsionsbeanspruchungen vermieden oder zumindest reduziert werden.

Figur 5 zeigt eine perspektivische Unteransicht eines Teils der Anordnung 1 aus Figur 4. Ähnlich wie bei der in Figur 3 gezeigten Ausführungsform umfasst die Leitung 10 den achsfesten Leitungsabschnitt 10B, der über den radteilflexiblen Leitungsabschnitt 10C mit dem radteilfesten Leitungsabschnitt 10A verbunden ist. Bezugszeichen K zeigt eine Kupplungseinrichtung, die auf dem Achskörper 4 angeordnet ist und über die die Leitung 10 zu dem Radteil 5B geführt wird.

Bei Betrachtung der Figuren 4 und 5 wird insbesondere deutlich, dass die durch die Feder- und/oder Verschränkungsbewegung FB (Figur 2) erzeugte Relativbewegung durch den achsflexiblen Leitungsabschnitt 10E ausgeglichen werden kann, während die durch die Lenkbewegung DB (Figur 3) erzeugte Relativbewegung durch den radteilflexiblen Leitungsabschnitt 10C ausgeglichen werden kann. Die Ausgleichsbewegungen finden als voneinander separierte, in unterschiedlichen Richtungen orientierten Ausgleichsbiegebewegungen statt.

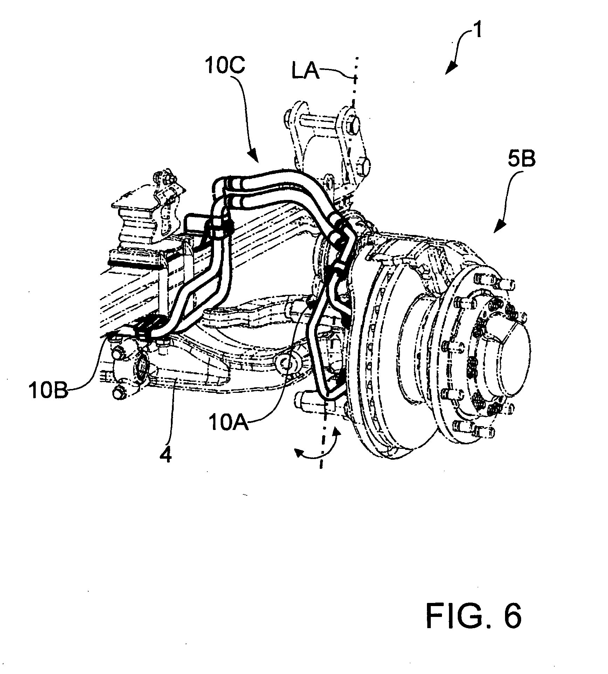

Figur 6 zeigt eine perspektivische Detailansicht der Anordnung 1 aus den Figuren 4 und 5, die insbesondere den radteilfesten Leitungsabschnitt 10A, den achsfesten Leitungsabschnitt 10B und den radteilflexiblen Leitungsabschnitt 10C zeigt. Figur 6 zeigt außerdem eine Lenkachse LA, die durch einen Achsschenkelbolzen definiert wird. Aufgrund des begrenzten Bauraums kann nur ein relativ kurzer radteilflexibler Leitungsabschnitt 10C eingesetzt werden. Der Weg, den der radteilfeste Leitungsabschnitt 10A am Übergabepunkt zu dem radteilflexiblen Leitungsabschnitt 10C zurücklegt, sollte so klein wie möglich gehalten werden. Dies kann erzielt werden, indem der radteilfeste Leitungsabschnitt 10A und der radteilflexible Leitungsabschnitt 10C über eine Kupplungsschnittstelle verbunden werden, die in die Lenkachse LA des Radteils 5B gelegt ist und als Pressfassung ausgeführt ist. Dadurch wird ermöglicht, dass die Bewegung der Leitungsenden zueinander minimiert wird und eine ebenso minimale Leitungslänge kann unter den gegebenen technisch möglichen Biegeradien realisiert werden.

Figur 6 ist außerdem zu entnehmen, dass die Leitung 10 relativ eng an dem Radteil 5B geführt werden kann. Dadurch wiederum ist es im Gegensatz zum Stand der Technik möglich, das Radteil 5B mit einer Gleitschutzkette, z.B. Schneekette, zu versehen. Außerdem wird der Nebenabtrieb am Getriebe G durch die Leitung 10 nicht verdeckt, was einen freien Zugriff darauf ermöglicht.

Die Erfindung ist nicht auf die vorstehend beschriebenen bevorzugten Ausführungsformen beschränkt, sondern durch die Patentansprüche.

## Patentansprüche

1. Anordnung (1) für ein Nutzfahrzeug, insbesondere Lastkraftwagen oder Omnibus, vorzugsweise mit einer zwei Längstragelemente (2) umfassenden Rahmentragstruktur für das Nutzfahrzug, mit:
- einem eine Achse (3) aufweisenden Achskörper (4),
- zumindest einem Radteil (5A, 5B), das relativ zu dem Achskörper (4) bewegbar ist, um eine Lenkbewegung (DB) des Nutzfahrzeugs zu ermöglichen, und
- zumindest einer Leitung (10), die zu dem Radteil (5A, 5B) führt und die mehrere Leitungsabschnitte umfasst, wobei ein Leitungsabschnitt (10A) radteilfest an dem Radteil (5A, 5B) angeordnet ist,
**dadurch gekennzeichnet, dass**
- ein Leitungsabschnitt (10B) achsfest an dem Achskörper (4) angeordnet ist, und/oder
- die Leitung (10) über zwei räumlich voneinander beabstandete flexible Leitungsabschnitte (10C, 10E) verfügt, von denen ein erster Leitungsabschnitt (10C) dazu dient, eine durch eine Lenkbewegung (DB) verursachte Relativbewegung auszugleichen, und ein zweiter Leitungsabschnitt (10E) dazu dient, eine durch eine Federbewegung (FB) verursachte Relativbewegung auszugleichen.

2. Anordnung (1) nach Anspruch 1, **dadurch gekennzeichnet, dass** der erste Leitungsabschnitt (10C) dazu dient, eine durch eine Lenkbewegung (DB) verursachte Relativbewegung zwischen dem achsfesten Leitungsabschnitt (10B) und dem radteilfesten Leitungsabschnitt (10A) auszugleichen und zwar vorzugsweise mittels einer im Wesentlichen einebig stattfindenden Ausgleichsbiegebewegung.

3. Anordnung (1) nach Anspruch 1 oder 2, **dadurch gekennzeichnet, dass** der erste Leitungsabschnitt (10C) den achsfesten Leitungsabschnitt (10B) und den radteilfesten Leitungsabschnitt (10A) verbindet.

4. Anordnung (1) nach einem der vorhergehenden Ansprüche, **dadurch gekennzeichnet, dass** der radteilfeste Leitungsabschnitt (10A) und der erste Leitungsabschnitt (10C) über eine Kupplungsschnittstelle verbunden sind, die in die Lenkachse (LA) des Radteils (5A, 5B) gelegt ist und/oder die als Pressfassung ausgeführt ist.

5. Anordnung (1) nach einem der vorhergehenden Ansprüche, **dadurch gekennzeichnet, dass** ein Leitungsabschnitt (10D) längstragelementfest an einem der Längstragelemente (2) angeordnet ist.

6. Anordnung (1) nach Anspruch 5, **dadurch gekennzeichnet, dass** der zweite Leitungsabschnitt (10E) den längstragelementfesten Leitungsabschnitt (10D) und den achsfesten Leitungsabschnitt (10B) verbindet.

7. Anordnung (1) nach einem der vorhergehenden Ansprüche, **dadurch gekennzeichnet, dass** ein Leitungsabschnitt (10D) triebstrangfest an einem Triebstrang für das Nutzfahrzeug angeordnet ist.

8. Anordnung (1) nach Anspruch 7, **dadurch gekennzeichnet, dass** der triebstrangfeste Leitungsabschnitt (10D) einen getriebefesten und/oder motorfesten Leitungsabschnitt umfasst.

9. Anordnung (1) nach Anspruch 7 oder 8, **dadurch gekennzeichnet, dass** der zweite Leitungsabschnitt (10E) den triebstrangfesten Leitungsabschnitt (10D) und den achsfesten Leitungsabschnitt (10B) verbindet.

10. Anordnung (1) nach einem der Ansprüche 5 bis 9, **dadurch gekennzeichnet, dass** der zweite Leitungsabschnitt (10E) dazu dient, eine durch eine Federbewegung (FB) verursachte Relativbewegung zwischen dem längstragelementfesten oder triebstrangfesten Leitungsabschnitt (10D) und dem achsfesten Leitungsabschnitt (10B) auszugleichen und zwar vorzugsweise mittels einer im Wesentlichen einebig stattfindenden Ausgleichsbiegebewegung.

11. Anordnung (1) nach einem der vorhergehenden Ansprüche, **dadurch gekennzeichnet, dass** die Leitung (10) über eine Kupplungseinrichtung (K), die auf dem Achskörper (4) angeordnet ist, zu dem Radteil (5A, 5B) geführt wird.

12. Anordnung (1) nach einem der vorhergehenden Ansprüche, **dadurch gekennzeichnet, dass** das Radteil (5A, 5B) einen vorzugsweise hydrostatisch angetriebenen Radmotor umfasst und die Leitung (10) dazu dient, den Radmotor mit druckbeaufschlagtem Fluid zu versorgen.

13. Anordnung (1) nach einem der vorhergehenden Ansprüche, **dadurch gekennzeichnet, dass** das Radteil (5A, 5B) eine Bremsanlage umfasst und die Leitung (10) dazu dient, die Bremsanlage mit druckbeaufschlagtem Fluid zu versorgen.

14. Anordnung (1) nach einem der vorhergehenden Ansprüche, **dadurch gekennzeichnet, dass** die Leitung (10) längstragelementbefestigungsfrei zu dem Radteil (5A, 5B) geführt wird, insbesondere zwischen einer Pumpeneinrichtung (11) und dem Radteil (5A, 5B) längstragelementbefestigungsfrei verläuft.

15. Anordnung (1) nach einem der vorhergehenden Ansprüche, **dadurch gekennzeichnet, dass** der Achskörper (4) als vorzugsweise lenkbarer Starrachskörper ausgeführt ist.

16. Anordnung (1) nach einem der vorhergehenden Ansprüche, **dadurch gekennzeichnet, dass** die Leitung (10) eine Hochdruckleitung und/oder eine Hydraulikleitung ist und einen geschlossenen hydraulischen Kreislauf bildet.

17. Nutzfahrzeug, insbesondere Lastkraftwagen oder Omnibus, mit einer Anordnung (1) nach einem der vorhergehenden Ansprüche.

## Claims

1. Arrangement (1) for a truck, in particular a goods vehicle or bus, preferably with a frame structure for the truck comprising two longitudinal support elements (2), with
- an axle body (4) having an axle (3),
- at least one wheel part (5A, 5B) which is mobile relative to the axle body (4) to allow a steering movement (DB) of the truck, and
- at least one line (10A) which leads to the wheel part (5A, 5B) and comprises several line segments, wherein one line segment (10A) is arranged on the wheel part (5A, 5B) and is fixed in relation to the wheel part,
**characterized in that**
- a line segment (10B) is arranged on the axle body (4) and is fixed in relation to the axle, and/or
- the line (10) has two flexible line segments (10C, 10E) physically separated from each other, of which a first line segment (10C) serves to compensate for a relative movement caused by a steering movement (DB), and a second line segment (10E) serves to compensate for a relative movement caused by a spring movement (FB).

2. Arrangement (1) according to Claim 1, **characterized in that** the first line segment (10C) serves to compensate for a relative movement caused by a steering movement (DB) between the line segment (10B) fixed in relation to the axle and the line segment (10A) fixed in relation to the wheel part, and preferably by means of a compensation bending movement which takes place substantially in one plane.

3. Arrangement (1) according to Claim 1 or 2, **characterized in that** the first line segment (10C) connects the line segment (10B) fixed in relation to the axle and the line segment (10A) fixed in relation to the wheel part.

4. Arrangement (1) according to any of the preceding claims, **characterized in that** the line segment (10A) fixed in relation to the wheel part and the first line segment (10C) are connected via a coupling interface which lies in the steering axis (LA) of the wheel part (5A, 5B) and/or is designed as a press-fit mounting.

5. Arrangement (1) according to any of the preceding claims, **characterized in that** a line segment (10D) is arranged on one of the longitudinal support elements (2) and is fixed in relation to the longitudinal support element.

6. Arrangement (1) according to Claim 5, **characterized in that** the second line segment (10E) connects the line segment (10D) fixed in relation to the longitudinal support element and the line segment (10B) fixed in relation to the axle.

7. Arrangement (1) according to any of the preceding claims, **characterized in that** a line segment (10D) is arranged on a drive train for the truck and is fixed in relation to the drive train.

8. Arrangement (1) according to Claim 7, **characterized in that** the line segment (10D) fixed in relation to the drive train comprises a line segment fixed in relation to the transmission and/or fixed in relation to the engine.

9. Arrangement (1) according to Claim 7 or 8, **characterized in that** the second line segment (10E) connects the line segment (10D) fixed in relation to the drive train and the line segment (10B) fixed in relation to the axle.

10. Arrangement (1) according to any of Claims 5 to 9, **characterized in that** the second line segment (10E) serves to compensate for a relative movement caused by a spring movement (FB) between the line segment (10D) fixed in relation to the longitudinal support element or fixed in relation to the drive train, and the line segment (10B) fixed in relation to the axle, and preferably by means of a compensation bending movement which takes place substantially in one plane.

11. Arrangement (1) according to any of the preceding claims, **characterized in that** the line (10) is guided to the wheel part (5A, 5B) via a coupling device (K) which is arranged on the axle body (4).

12. Arrangement (1) according to any of the preceding claims, **characterized in that** the wheel part (5A, 5B) comprises a wheel motor which is preferably driven hydrostatically, and the line (10) serves to supply the wheel motor with pressurised fluid.

13. Arrangement (1) according to any of the preceding claims, **characterized in that** the wheel part (5A, 5B) comprises a brake system, and the line (10) serves to supply the brake system with pressurised fluid.

14. Arrangement (1) according to any of the preceding claims, **characterized in that** the line (10) is guided to the wheel part (5A, 5B) free of fixings on the longitudinal support element, in particular running between a pump device (11) and the wheel part (5A, 5B) free of fixings on the longitudinal support element.

15. Arrangement (1) according to any of the preceding claims, **characterized in that** the axle body (4) is designed as a preferably steerable, rigid axle body.

16. Arrangement (1) according to any of the preceding claims, **characterized in that** the line (10) is a high pressure line and/or a hydraulic line and forms a closed hydraulic circuit.

17. Truck, in particular heavy goods vehicle or bus, with an arrangement (1) according to any of the preceding claims.

## Revendications

1. Agencement (1) pour un véhicule utilitaire, en particulier pour un poids-lourd ou un autobus, de préférence comprenant une structure de support de châssis comprenant deux éléments de support longitudinaux (2) pour le véhicule utilitaire, comprenant :
- un corps d'essieu (4) présentant un axe (3),
- au moins une partie de roue (5A, 5B) qui est déplaçable par rapport au corps d'essieu (4), afin de permettre un mouvement de direction (DB) du véhicule utilitaire, et
- au moins une conduite (10) qui mène jusqu'à la partie de roue (5A, 5B) et qui comporte plusieurs portions de conduite, une portion de conduite (10A) étant disposée sur la partie de roue (5A, 5B) de manière fixée à la partie de roue,
**caractérisé en ce que**
- une portion de conduite (10B) est disposée sur le corps d'essieu (4) de manière fixée à l'essieu, et/ou
- la conduite (10) dispose de deux portions de conduite (10C, 10E) flexibles espacées spatialement l'une de l'autre, parmi lesquelles une première portion de conduite (10C) sert à compenser un mouvement relatif provoqué par un mouvement de direction (DB), et une deuxième portion de conduite (10E) sert à compenser un mouvement relatif provoqué par un mouvement élastique (FB).

2. Agencement (1) selon la revendication 1, **caractérisé en ce que** la première portion de conduite (10C) sert à compenser un mouvement relatif provoqué par un mouvement de direction (DB) entre la portion de conduite (10B) fixée à l'essieu et la portion de conduite (10A) fixée à la partie de roue, et ce de préférence au moyen d'un mouvement de flexion de compensation ayant lieu essentiellement dans un plan.

3. Agencement (1) selon la revendication 1 ou 2, **caractérisé en ce que** la première portion de conduite (10C) relie la portion de conduite (10B) fixée à l'essieu et la portion de conduite (10A) fixée à la partie de roue.

4. Agencement (1) selon l'une quelconque des revendications précédentes, **caractérisé en ce que** la portion de conduite (10A) fixée à la partie de roue et la première portion de conduite (10C) sont reliées par le biais d'une interface d'accouplement qui est placée dans l'essieu directeur (LA) de la partie de roue (5A, 5B) et/ou est réalisée sous forme de support à ajustement serré.

5. Agencement (1) selon l'une quelconque des revendications précédentes, **caractérisé en ce qu'**une portion de conduite (10D) est disposée sur l'un des éléments de support longitudinaux (2) de manière fixée à l'élément de support longitudinal.

6. Agencement (1) selon la revendication 5, **caractérisé en ce que** la deuxième portion de conduite (10E) relie la portion de conduite (10D) fixée à l'élément de support longitudinal et la portion de conduite (10B) fixée à l'essieu.

7. Agencement (1) selon l'une quelconque des revendications précédentes, **caractérisé en ce qu'**une portion de conduite (10D) est disposée sur une chaîne cinématique pour le véhicule utilitaire de manière fixée à la chaîne cinématique.

8. Agencement (1) selon la revendication 7, **caractérisé en ce que** la portion de conduite (10D) fixée à la chaîne cinématique comporte une portion de conduite fixée à la transmission et/ou fixée au moteur.

9. Agencement (1) selon la revendication 7 ou 8, **caractérisé en ce que** la deuxième portion de conduite (10E) relie la portion de conduite (10D) fixée à la chaîne cinématique et la portion de conduite (10B) fixée à l'essieu.

10. Agencement (1) selon l'une quelconque des revendications 5 à 9, **caractérisé en ce que** la deuxième portion de conduite (10E) sert à compenser un mouvement relatif provoqué par un mouvement élastique (FB) entre la portion de conduite (10D) fixée à l'élément de support longitudinal ou fixée à la chaîne cinématique et la portion de conduite (10B) fixée à l'essieu, et ce de préférence au moyen d'un mouvement de flexion de compensation ayant lieu essentiellement dans un plan.

11. Agencement (1) selon l'une quelconque des revendications précédentes, **caractérisé en ce que** la conduite (10) est guidée jusqu'à la partie de roue (5A, 5B) par le biais d'un dispositif d'accouplement (K) qui est disposé sur le corps d'essieu (4).

12. Agencement (1) selon l'une quelconque des revendications précédentes, **caractérisé en ce que** la partie de roue (5A, 5B) comporte un moteur de roue de préférence à entraînement hydrostatique et la conduite (10) sert à alimenter le moteur de roue en fluide sous pression.

13. Agencement (1) selon l'une quelconque des revendications précédentes, **caractérisé en ce que** la partie de roue (5A, 5B) comporte un système de freinage et la conduite (10) sert à alimenter le système de freinage en fluide sous pression.

14. Agencement (1) selon l'une quelconque des revendications précédentes, **caractérisé en ce que** la conduite (10) est guidée jusqu'à la partie de roue (5A, 5B) de manière exempte de fixation à l'élément de support longitudinal, en particulier s'étend entre un dispositif de pompe (11) et la partie de roue (5A, 5B) de manière exempte de fixation à l'élément de support longitudinal.

15. Agencement (1) selon l'une quelconque des revendications précédentes, **caractérisé en ce que** le corps d'essieu (4) est réalisé sous forme de corps d'essieu rigide de préférence dirigeable.

16. Agencement (1) selon l'une quelconque des revendications précédentes, **caractérisé en ce que** la conduite (10) est une conduite haute pression et/ou une conduite hydraulique et forme un circuit hydraulique fermé.

17. Véhicule utilitaire, en particulier poids-lourd ou autobus, comprenant un agencement (1) selon l'une quelconque des revendications précédentes.
